# EUROPÄISCHE PATENTANMELDUNG

(11) **EP 1 566 914 A2**
(43) Veröffentlichungstag der Anmeldung: **24.08.2005**
(21) Anmeldenummer: 05100034.7
(22) Anmeldetag: 05.01.2005
(51) Int. Cl.: H04L 1/00

(54) **Verfahren zum Verbessern der Qualität einer Sprachübertragung über eine Luftschnittstelle**

(30) Priorität: 18.02.2004 DE 102004007976
(71) Anmelder: SIEMENS AKTIENGESELLSCHAFT, 80333 München (DE)
(72) Erfinder: Heitmann, Jürgen, 82061, Neuried (DE)

(57) **Zusammenfassung**

Erfindungsgemäß wird zum Verbessern der Qualität einer Sprachübertragung über eine zur Sprachdaten- und Allgemeindatenübertragung (DAT) vorgesehene Luftschnittstelle (LS) zunächst geprüft, ob die über die Luftschnittstelle (LS) zu übertragenden Daten (DA, DB, DAT) Sprachdaten (DA, DB) sind. Falls dies zutrifft, wird ein für Sprachübertragung spezifisches Vorwärtsfehlerkorrekturverfahren zugeschaltet, das auf die Sprachdaten (DA, DB) im Rahmen ihrer Übertragung über die Luftschnittstelle (LS) angewandt wird.

## Beschreibung

Zeitgemäße Kommunikationssysteme weisen in zunehmendem Maße mobile Kommunikationseinrichtungen, insbesondere mobile Sprachkommunikationseinrichtungen auf. Bei einer drahtlosen Sprachübertragung werden in Echtzeit zu übertragende Sprachsignale zumeist digitalisiert und in Form von Datenpaketen über eine Luftschnittstelle übertragen. Im Bereich der bidirektionalen drahtlosen Sprachkommunikation haben sich unterschiedliche Übertragungsstandards, wie z.B. DECT (Digital European Cordless Telecommunications) oder GSM (Global System for Mobile Communications) etabliert. Darüber hinaus sind gegenwärtig Tendenzen zu beobachten, die darauf abzielen, auch sogenannte WLANs (Wireless Local Area Networks), die eigentlich zur Datenkommunikation vorgesehen sind, zur drahtlosen Sprachübertragung zu nutzen.

Die genannten drahtlosen Übertragungstechniken verwenden Übertragungsfrequenzen in der Größenordnung von einem bis zu einigen Gigahertz. Dies entspricht Übertragungswellenlängen von circa 30 cm und darunter.

In funktechnisch schwierigen Umgebungen mit vielen funkwellenreflektierenden Flächen, z.B. in oder zwischen Gebäuden führen häufige Funkreflexionen zu Mehrwegeempfang und Funkwellenüberlagerungen. Dabei treten häufig destruktive Interferenzen oder Schwingungsknoten auf, die an einigen Stellen im Raum zu lokalen Signalauslöschungen führen können. Ein mobiles Endgerät, das von seinem Benutzer bei aufgebauter Sprachverbindung in einer solchen funktechnisch schwierigen Umgebung bewegt wird, überstreicht während der Bewegung häufig derartige Stellen mit Signalauslöschung oder zumindest Signalabschwächung. Dies macht sich während eines Gesprächs in der Regel durch Knackgeräusche oder Übertragungsunterbrechungen bemerkbar, die vom Benutzer meist als sehr störend empfunden werden und die wahrgenommene Sprachqualität erheblich verschlechtern.

Zur Reduzierung dieser Beeinträchtigungen werden bei schmalbandigen Sprachübertragungssystemen, wie z.B. GSM sogenannte Equalizer zur Unterdrückung von Mehrwegeempfang eingesetzt. Bei Funkübertragungen mit höheren Bandbreitenbedarf, z.B. bei DECT- oder WLAN-Systemen, erforderte ein solcher Equalizer allerdings einen erheblich höheren Realisierungsaufwand. Zudem würde ein Equalizer die Empfangssituation bei lokaler Signalauslöschung nicht verbessern.

Eine weitere Möglichkeit zur Vermeidung von Empfangsbeeinträchtigungen in funktechnisch schwieriger Umgebung besteht darin, mindestens zwei räumlich voneinander getrennte Antennen, gegebenenfalls mit getrennten Empfängern einzusetzen. Im Betrieb wird jeweils zu derjenigen Antenne oder demjenigen Empfänger geschaltet, dessen Signal das beste Signal-zu-Rausch-Verhältnis aufweist. Diese Technik wird häufig auch als Antennen-Diversity oder Raum-Diversity bezeichnet. Da hierbei eine zusätzliche Antenne und in der Regel eine zusätzliche Empfangsschaltung erforderlich ist, ist eine Realisierung jedoch verhältnismäßig aufwendig.

Es ist Aufgabe der vorliegenden Erfindung ein Verfahren zum Verbessern der Qualität einer Sprachübertragung über eine zur Sprachdaten- und Allgemeindatenübertragung vorgesehene Luftschnittstelle anzugeben, das mit geringerem Aufwand realisierbar ist.

Gelöst wird diese Aufgabe durch ein Verfahren mit den Merkmalen des Patentanspruchs 1.

Erfindungsgemäß wird zum Verbessern der Qualität einer Sprachübertragung über eine zur Sprachdaten- und Allgemeindatenübertragung vorgesehene Luftschnittstelle zunächst geprüft, ob über die Luftschnittstelle zu übertragende Daten Sprachdaten sind. Falls dies zutrifft, wird ein für Sprachübertragung spezifisches Vorwärtsfehlerkorrekturverfahren zugeschaltet, das auf die Sprachdaten im Rahmen ihrer Übertragung über die Luftschnittstelle angewandt wird. Die Luftschnittstelle kann hierbei z.B. gemäß dem DECT- oder GSM-Standard oder gemäß einem WLAN-Standard wie IEEE-802.11 realisiert sein.

Durch die Zuschaltung eines für Sprachübertragung spezifischen Vorwärtsfehlerkorrekturverfahrens kann die Häufigkeit von Übertragungsfehlern, insbesondere bei sich bewegenden Benutzern erheblich reduziert und somit die Sprachübertragungsqualität wesentlich verbessert werden. Das für Sprachübertragung spezifische Vorwärtsfehlerkorrekturverfahren ist insbesondere durch ein gutes Echtzeitverhalten charakterisiert. Andere im Zusammenhang mit Allgemeindaten häufig verwendete Fehlerkorrekturverfahren weisen in der Regel ein für Sprachübertragungen nicht akzeptables Echtzeitverhalten auf.

Die Prüfung auf Sprachdaten und die davon abhängige Zuschaltung des für Sprachübertragung spezifischen Vorwärtsfehlerkorrekturverfahrens erlaubt es, auch bei eigentlich für Allgemeindatenübertragungen vorgesehenen Luftschnittstellen, wie z.B. WLAN-Luftschnittstellen eine hohe Sprachübertragungsqualität zu erreichen ohne eine effiziente Übertragung von Allgemeindaten zu beeinträchtigen. Die Entscheidung, ob zu übertragende Daten Sprachdaten sind, kann hierbei z.B. anhand einer den Daten zugeordneten Signalisierungsinformation, Prioritätsinformation oder Dienstgüteangabe (Quality of Service) oder anhand der Datenpaketgröße getroffen werden.

Mit Hilfe des erfindungsgemäßen Verfahrens wird die Sprachübertragung unempfindlicher gegenüber kurzzeitigen Funkstörungen, z.B. durch Zündfunken, und insbesondere gegenüber einem kurzzeitigen Durchgang einer mit dem Benutzer bewegten Empfangsantenne der Luftschnittstelle durch Raumbereiche mit lokaler Signalauslöschung (Schwingungsknoten). Somit kann auch in funktechnisch schwieriger Umgebung eine hohe Sprachübertragungsqualität gewährleistet werden, ohne dass zusätzliche Antennen oder Empfangsschaltungen erforderlich wären.

Vorteilhafte Ausführungsformen und Weiterbildungen der Erfindung sind in den abhängigen Ansprüchen angegeben.

Gemäß einer vorteilhaften Ausführungsform der Erfindung basiert das Vorwärtsfehlerkorrekturverfahren auf einem gespreizten konvolutionellen Kode, vorzugsweise mit einem Informations-Prüfschrittverhältnis von 1:1. Ein derartiges Vorwärtsfehlerkorrekturverfahren ist beispielsweise in dem Fachbuch "Fernschreib- und Datenübertragung über Kurzwelle", von Lothar Wiesner, im Verlag der Siemens AG, Berlin und München, 1975, auf Seite 139 beschrieben. Die Verwendung eines gespreizten konvolutionellen Kodes erlaubt es, insbesondere kurzzeitige Übertragungsstörungen zu kompensieren und fehlerhaft übertragene Sprachdaten zu rekonstruieren. Die durch Kodierung und Dekodierung der Sprachdaten bedingte Übertragungsverzögerung ist bei gespreizten konvolutionellen Kodes verhältnismäßig gering, woraus ein gutes Echtzeitverhalten resultiert.

Ferner kann vorgesehen sein, dass zur Übertragung von im Rahmen des Vorwärtsfehlerkorrekturverfahrens zu den Sprachdaten hinzugefügten Redundanzdaten ein zusätzlicher Übertragungskanal der Luftschnittstelle belegt wird. Auf diese Weise kann ein Einfluss kanalspezifischer Störungen verringert werden. Bei einer DECT-Luftschnittstelle kann z.B. eine Sprachverbindung mit einer Übertragungsrate von 32 kBit/sec auf mindestens zwei Datenkanäle mit zusammen mindestens 64 kBit/sec aufgeteilt werden. Bei einer WLAN-Luftschnittstelle kann eine Sprachverbindung entsprechend auf mindestens zwei logische Kanäle oder logische Verbindungen aufgeteilt werden.

Vorzugsweise kann mit dem Vorwärtsfehlerkorrekturverfahren ein Sprachkompressionsverfahren, z.B. gemäß der ITU-T-Empfehlung G.729 zur senderseitigen Komprimierung und empfangsseitigen Dekomprimierung der Sprachdaten zugeschaltet werden. Das Sprachkompressionsverfahren ist vorzugsweise an die Erfordernisse einer Echtzeitsprachübertragung angepasst und so ausgestaltet, dass ein kontinuierlicher Eingangs-Sprachdatenstrom mit möglichst geringer Verzögerung in einen kontinuierlichen Ausgangs-Sprachdatenstrom mit geringerer Datenrate umgesetzt wird. Die komprimierten und im Rahmen des Vorwärtsfehlerkorrekturverfahrens mit Redundanzdaten versehenen Sprachdaten können dann aufgrund der durch die Komprimierung erzielten, reduzierten Übertragungsrate innerhalb eines einzelnen Übertragungskanals der Luftschnittstelle übertragen werden. Dies ist insofern vorteilhaft, als kein zusätzlicher Übertragungskanal der Luftschnittstelle belegt wird. So kann z.B. bei einer Übertragung gemäß dem DECT-Standard anstelle des dort verwendeten ADPCM-Sprachkompressionsverfahrens (ADPCM: Adaptive differentielle Puls-Code-Modulation) ein anderes Sprachkompressionsverfahren, z.B. gemäß dem G.729-Standard, eingesetzt werden, das auf eine niedrigere Datenrate umsetzt als das ADPCM-Verfahren. Bei Verwendung einer Sprachkompression gemäß G.729-Standard wird auf eine Datenrate von 8 kBit/sec umgesetzt, so dass die Übertragungsrate von 32 kBit/sec eines einzelnen Übertragungskanals der DECT-Luftschnittstelle für die Übertragung der mit Redundanzdaten versehenen Sprachdaten ausreicht.

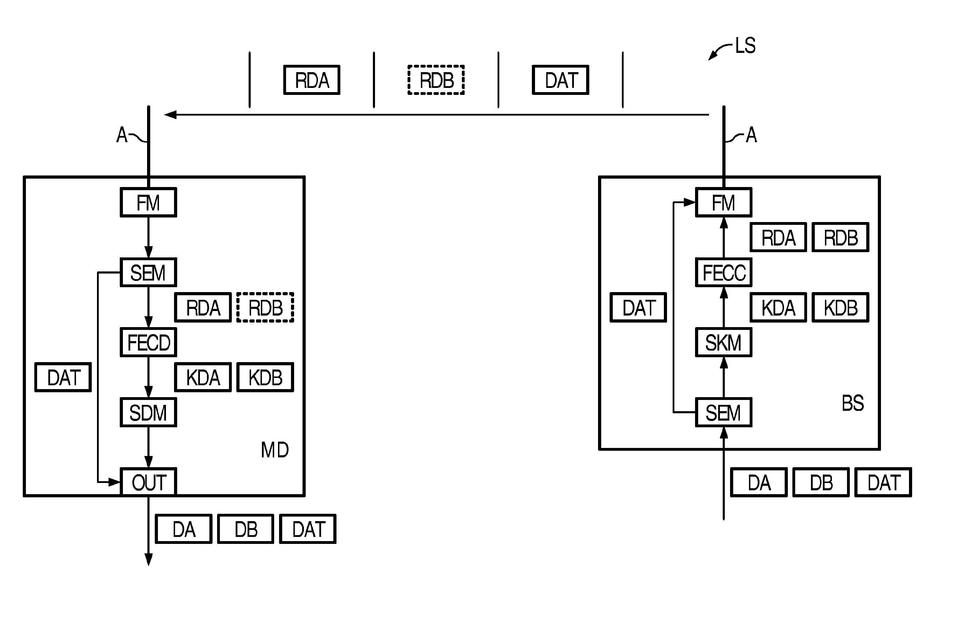

Ein Ausführungsbeispiel der Erfindung wird nachfolgend anhand der Zeichnung näher erläutert.

Die Figur zeigt in schematischer Darstellung eine Basisstation und eine mobile Endeinrichtung, zwischen denen eine drahtlose Sprachverbindung aufgebaut ist.

In der Figur sind eine Basisstation BS sowie eine mobile Endeinrichtung MD schematisch dargestellt. Die Basisstation BS kann z. B. gemäß dem DECT- oder GSM-Standard oder als sogenannter WLAN-Access-Point realisiert sein. Die mobile Endeinrichtung MD kann beispielsweise ein Schnurlostelefon gemäß DECT-Standard, ein Mobiltelefon gemäß GSM-Standard oder ein anderes mobiles Endgerät, wie z.B. ein Laptop oder PDA (Personal Digital Assistant), mit WLAN-Schnittstelle sein.

Die mobile Endeinrichtung MD ist über eine Luftschnittstelle LS an die Basisstation BS gekoppelt und es sei angenommen, dass eine drahtlose Echtzeitsprachverbindung besteht. Die Luftschnittstelle LS ist in der Figur durch einen waagrechten Pfeil angedeutet und kann z.B. gemäß dem DECT- oder GSM-Standard oder gemäß einem IEEE-802.11-WLAN-Standard ausgestaltet sein. Die Luftschnittstelle LS weist vorzugsweise mehrere Übertragungskanäle zur Sprach- oder Datenübertragung auf, so dass mehrere logische Verbindungen aufbaubar sind. In der Figur wird indessen aus Übersichtlichkeitsgründen nur einer dieser Übertragungskanäle veranschaulicht.

Zur Realisierung der Luftschnittstelle LS verfügen die mobile Endeinrichtung MD sowie die Basisstation BS jeweils über ein Funkmodul FM mit Funkantenne A.

Die Basisstation BS verfügt weiterhin über einen mit deren Funkmodul FM gekoppelten Vorwärtsfehlerkorrektur-Kodierer FECC, ein mit diesem gekoppeltes Sprachkompressionsmodul SKM sowie über ein mit dem Sprachkompressionsmodul SKM gekoppeltes Spracherkennungsmodul SEM.

Die mobile Endeinrichtung MD weist entsprechend ein mit ihrem Funkmodul FM gekoppeltes Spracherkennungsmodul SEM, einen damit gekoppelten Vorwärtsfehlerkorrektur-Dekodierer FECD sowie ein mit diesem gekoppeltes Sprachdekompressionsmodul SDM auf. Zur Ausgabe empfangener Daten verfügt die mobile Endeinrichtung MD über einen Ausgangsport OUT.

Im Rahmen der Sprachverbindung werden der Basisstation BS Sprachdaten DA und DB sowie ein keine Sprachdaten enthaltendes Datenpaket DAT zugeleitet, um von der Basisstation BS zur mobilen Endeinrichtung MD über die Luftschnittstelle LS übertragen zu werden. Die zu übertragenden Sprachdaten DA und DB können z.B. als Sprachdatenpakete gemäß der TCP/IP-Protokollfamilie oder als Sprachdatenstrom vorliegen. Im Folgenden werden sowohl TCP/IP-Sprachdatenpakete als auch einzelne Abschnitte eines Sprachdatenstroms als Sprachdatenpakete bzw.

Datenpakete bezeichnet und durch die Bezugszeichen DA und DB referenziert.

Im vorliegenden Ausführungsbeispiel wird aus Gründen der Übersichtlichkeit nur die Übertragungsrichtung von der Basisstation BS zur mobilen Endeinrichtung MD betrachtet. Die diesbezüglichen Ausführungen gelten jedoch sinngemäß auch für die andere Übertragungsrichtung.

Die zu übertragenden Datenpakte DA, DB und DAT werden zunächst dem Spracherkennungsmodul SEM der Basisstation BS zugeleitet, durch das geprüft wird, ob sie Sprachdaten enthalten oder nicht. Bei DECT-Systemen kann dies beispielsweise anhand einer den zu prüfenden Datenpaketen zugeordneten Signalisierung erkannt werden. Im vorliegenden Ausführungsbeispiel werden die Sprachdatenpakete DA und DB als solche erkannt und infolgedessen vom Spracherkennungsmodul SEM dem Sprachkomprimierungsmodul SKM zugeführt. Das keine Sprachdaten enthaltende Datenpaket DAT wird dagegen vom Spracherkennungsmodul SEM direkt zum Funkmodul FM der Basisstation BS weitergeleitet. Das Sprachkompressionsmodul SKM komprimiert die in den Sprachdatenpaketen DA und DB enthaltenen Sprachdaten in quasikontinuierlicher Weise und gibt komprimierte Sprachdatenpakete KDA und KDB aus, die an den Vorwärtsfehlerkorrektur-Kodierer FECC weitergeleitet werden. Das jeweilige komprimierte Sprachdatenpaket KDA bzw. KDB enthält hierbei jeweils die komprimierten Sprachdaten aus dem Sprachdatenpaket DA bzw. DB.

Das Sprachkompressionsmodul SKM ist vorzugsweise mittels eines sogenannten Codecs z.B. gemäß der ITU-T-Empfehlung G.729 realisiert. Ein derartiger Codec setzt in komprimierte Sprachdaten mit einer Sprachdatenrate von 8 kbit pro Sekunde um. Bei DECT-Systemen kann eine derartige Sprachkomprimierung anstelle der dort üblichen ADPCM-Kodierung mit einer Sprachdatenrate von 32 kbit pro Sekunde eingesetzt werden.

Durch den Vorwärtsfehlerkorrektur-Kodierer FECC wird ein jeweiliges komprimiertes Sprachdatenpaket KDA bzw. KDB mittels eines Vorwärtsfehlerkorrekturverfahrens, das vorzugsweise auf einem gespreizten konvolutionellen Kode mit einem Informations-Prüfschrittverhältnis von 1:1 basiert, kodiert und auf diese Weise mit Redundanzdaten ergänzt. Durch die Vorwärtsfehlerkorrekturkodierung wird ein jeweiliges komprimiertes Sprachdatenpaket KDA bzw. KDB in ein mit Redundanzdaten versehenes Sprachdatenpaket RDA bzw. RDB umgesetzt, das von dem Vorwärtsfehlerkorrektur-Kodierer FECC zum Funkmodul FM weitergeleitet wird.

Durch das Funkmodul FM werden die Sprachdatenpakete RDA und RDB sowie das vom Spracherkennungsmodul SEM direkt zum Funkmodul FM übertragene Datenpaket DAT über die Luftschnittstelle LF zur mobilen Endeinrichtung MD übertragen.

Im vorliegenden Ausführungsbeispiel werden die Datenpakete RDA, RDB und DAT jeweils in einem einzelnen Funkrahmen der Luftschnittstelle LS übertragen. Die Funkrahmen sind in der Figur durch senkrechte Linien angedeutet. Im zuerst gesendeten Funkrahmen wird das Sprachdatenpaket RDA, im nachfolgenden Funkrahmen das Sprachdatenpaket RDB und im dritten Funkrahmen das Datenpaket DAT übertragen. Es sei hierbei vorausgesetzt, dass die ursprünglichen Sprachdatenpakete DA und DB derart komprimiert werden, dass die nach Hinzufügung der Redundanzdaten resultierenden Datenpakte RDA und RDB jeweils in einem eigentlich für ein einzelnes unkomprimiertes Sprachdatenpaket ohne Redundanzdaten vorgesehenen Funkrahmen übertragen werden können. Auf diese Weise können die Sprachdatenpakete RDA und RDB im selben Sprachkanal bzw. innerhalb der selben logischen Sprachverbindung über die Luftschnittstelle LS übertragen werden.

Alternativ dazu können die Sprachdatenpakete RDA und RDB oder gegebenenfalls ein vorzugebender Redundanzanteil dieser Datenpakete in verschiedenen Übertragungskanälen oder über verschiedene logische Verbindungen über die Luftschnittstelle LS übermittelt werden. Diese Alternative ist insbesondere für WLAN-Systeme bedeutsam, da bei solchen Systemen häufig bereits vorher komprimierte Sprachdaten zu übertragen sind, die keine weitere Kompression erlauben. Die Hinzufügung von Redundanzdaten könnte in einem solchen Fall die Übertragungskapazität eines einzelnen Übertragungskanals überschreiten. Nach einer vorteilhaften Ausgestaltung kann vorgesehen sein, die zu übertragenden Sprachdaten zusätzlich dahingehend zu prüfen, ob sie noch derart komprimiert werden können, dass sie zusammen mit hinzugefügten Redundanzdaten innerhalb eines einzelnen Übertragungskanals übertragen werden können. Abhängig vom Prüfungsergebnis können die Sprachdaten dann entweder zusätzlich komprimiert und im selben Übertragungskanal oder nicht weiter komprimiert und in verschiedenen Übertragungskanälen übermittelt werden.

Für das vorliegende Ausführungsbeispiel sei angenommen, dass das Datenpaket RDB bei der Übertragung über die Luftschnittstelle LS durch einen Übertragungsfehler verfälscht wird. Die Verfälschung ist in der Figur durch eine Punktierung des Datenpakets RDB angedeutet.

Die Datenpakete RDA, RDB und DAT werden vom Funkmodul FM der mobilen Endeinrichtung D empfangen und zu deren Spracherkennungsmodul SEM weitergeleitet. Das Spracherkennungsmodul SEM überprüft bei jedem empfangenen Datenpaket, ob es sich um ein Sprachdatenpaket handelt. Im vorliegenden Ausführungsbeispiel werden die Sprachdatenpakete RDA und RDB als solche erkannt und vom Spracherkennungsmodul SEM zum Vorwärtsfehlerkorrektur-Dekodierer FECD übermittelt. Das Datenpaket DAT wird dagegen vom Spracherkennungsmodul SEM als Nicht-Sprachdatenpaket erkannt und als solches direkt zum Ausgangsport OUT weitergeleitet, um von diesem ausgegeben zu werden.

Durch den Vorwärtsfehlerkorrektur-Dekodierer FECD werden das Sprachdatenpaket RDA in das komprimierte Sprachdatenpaket KDA und das verfälschte Sprachdatenpaket RDB in das komprimierte Datenpaket KDB umgesetzt. Die im verfälschten Sprachdatenpaket RDB enthaltenen Redundanzdaten erlauben es im vorliegenden Ausführungsbeispiel, das komprimierte Datenpaket KDB fehlerfrei zu rekonstruieren. In der Praxis kann durch die erfindungsgemäße Anwendung des Vorwärtsfehlerkorrekturverfahrens die Häufigkeit von Übertragungsfehlern typischerweise um einen Faktor von 10 bis 100 reduziert werden.

Die komprimierten Sprachdatenpakte KDA und KDB werden vom Vorwärtsfehlerkorrektur-Dekodierer FECD anschließend zum Sprachdekompressionsmodul SDM übertragen, um von diesem in die unkomprimierten Sprachdatenpakete DA und DB umgesetzt zu werden, die schließlich über den Ausgangsport OUT ausgegeben werden.

## Patentansprüche

1. Verfahren zum Verbessern der Qualität einer Sprachübertragung über eine zur Sprachdaten- und Allgemeindatenübertragung vorgesehene Luftschnittstelle (LS), bei dem
a) geprüft wird, ob über die Luftschnittstelle (LS) zu übertragende Daten (DA, DB, DAT) Sprachdaten (DA, DB) sind, und falls dies zutrifft,
b) ein für Sprachübertragung spezifisches Vorwärtsfehlerkorrekturverfahren zugeschaltet wird, das auf die Sprachdaten (DA, DB) im Rahmen ihrer Übertragung über die Luftschnittstelle (LS) angewandt wird.

2. Verfahren nach Anspruch 1,
**dadurch gekennzeichnet,**
**dass** das Vorwärtsfehlerkorrekturverfahren auf einem gespreizten konvolutionellen Kode basiert.

3. Verfahren nach einem der vorhergehenden Ansprüche,
**dadurch gekennzeichnet,**
**dass** zur Übertragung von im Rahmen des Vorwärtsfehlerkorrekturverfahrens zu den Sprachdaten (DA, DB) hinzugefügten Redundanzdaten ein zusätzlicher Übertragungskanal der Luftschnittstelle (LS) belegt wird.

4. Verfahren nach einem der vorhergehenden Ansprüche,
**dadurch gekennzeichnet,**
**dass** mit dem Vorwärtsfehlerkorrekturverfahren ein Sprachkompressionsverfahren zur senderseitigen Komprimierung und empfangsseitigen Dekomprimierung der Sprachdaten (DA, DB) zugeschaltet wird.

5. Verfahren nach Anspruch 4,
**dadurch gekennzeichnet,**
**dass** die komprimierten und im Rahmen des Vorwärtsfehlerkorrekturverfahrens mit Redundanzdaten versehenen Sprachdaten (RDA, RDB) innerhalb eines einzelnen Übertragungskanals der Luftschnittstelle (LS) übertragen werden.
